(19) Europäisches Patentamt
European Patent Office
Office européen des brevets

(11) EP 0 974 618 B1

(12) **EUROPEAN PATENT SPECIFICATION**

(45) Date of publication and mention of the grant of the patent:
**19.11.2003 Bulletin 2003/47**

(51) Int Cl.7: **C08L 23/16**, C08K 3/26, B41J 13/02 // (C08L23/16, C08K3:26)

(21) Application number: **99112369.6**

(22) Date of filing: **28.06.1999**

(54) **Cross-linked rubber composition, rubber roller, and method of manufacturing rubber roller**

Vernetzte Kautschuk-Zusammensetzung, Kautschukwalze und Verfahren zur Herstellung einer Kautschukwalze

Composition de caoutchouc réticulé, et procédé pour la préparation d'un rouleau en caoutchouc

(84) Designated Contracting States:
**DE FR GB**

(30) Priority: **21.07.1998 JP 20527698**

(43) Date of publication of application:
**26.01.2000 Bulletin 2000/04**

(73) Proprietor: **Sumitomo Rubber Industries Ltd.**
**Kobe-shi, Hyogo-ken (JP)**

(72) Inventors:
- **Uesaka, Kenichi**
  **Osaka-shi, Osaka-fu (JP)**
- **Tajima, Kei**
  **Amagasaki-shi, Hyogo (JP)**

(74) Representative:
**TER MEER STEINMEISTER & PARTNER GbR**
**Patentanwälte,**
**Mauerkircherstrasse 45**
**81679 München (DE)**

(56) References cited:
**WO-A-93/05110** **US-A- 3 887 756**

- **PATENT ABSTRACTS OF JAPAN vol. 008, no. 154 (M-310), 18 July 1984 (1984-07-18) & JP 59 049956 A (TOUKAI KOGYO KK), 22 March 1984 (1984-03-22)**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

## BACKGROUND OF THE INVENTION

### Field of the Invention

Generally, the present invention relates to a cross-linked rubber composition superior in ozone resistance and having an appropriate degree of hardness and a high degree of mechanical strength, with a mixing ingredient not giving rise to blooming. More particularly, the present invention relates to a cross-linked rubber composition which is molded to use it preferably as electric parts, covers of electric wires, packing, sealing gaskets, waterproof sheets, hoses, and rubber parts of OA equipment. The present invention also relates to a rubber roller serving as paper-feeding rollers of image-forming apparatuses such as electrostatic copying apparatus, laser printers, and facsimiles.

### Description of the Related Art

Rubber containing EPDM rubber ( copolymer rubber of ethylene-propylene-diene) as its main component is used for many ozone resistance-required rubber products for industrial use and daily life such as electric parts, covers of electric wires, packing, sealing gaskets, waterproof sheets, and hoses. This is because the main chain of the EPDM rubber consists of saturated hydrocarbon being chemically stable. That is, the main chain cannot be cut off easily when the EPDM rubber is subjected to sunlight and high-concentration ozone for a long time and thus the EPDM rubber does not deteriorate easily.

US 3,887,756 refers to polymer-base paints used as coatings on substrates of elastomeric compositions, these compositions comprising at least one elastomer selected from the group consisting of butyl rubber and an EPDM rubber, a heat reactive phenol-aldehyde resin and a metal oxide or halide.

Image-forming apparatuses such as electrostatic copying apparatuses, laser printers and facsimiles, may generate ozone therein because of their constructions. Accordingly, the EPDM material resistant to ozone is used for many paper-feeding rubber rollers (hereinafter referred to as merely paper-feeding roller) for use in the image-forming apparatuses.

To reduce the hardness of rubber products for industrial use and daily life, in many cases, oil such as process oil and a plasticizer are added to rubber or oil-extended rubber is used. Rubber is cross-linked (vulcanized) to reduce permanent compression set as necessary.

In order to allow the paper-feeding roller for use in the image-forming apparatuses such as electrostatic copying apparatuses, laser printers, and facsimiles, to keep its performance for a long time, the paper-feeding roller is required to be flexible for securing a large contact area between it and paper and have a high degree of wear resistance to prevent the surface thereof from being worn fast. Therefore, oil such as the process. oil or the plasticizer is added to rubber or the oil-extended rubber is used, and the rubber is cross-linked (vulcanized).

Normally, in cross-linking (vulcanizing) rubber, sulfur or an organic peroxide is used as a vulcanizing (cross-linking) agent In a mixture of the rubber, the oil and the plasticizer, the reaction of the organic peroxide is inhibited by the oil or the plasticizer. Thus, sulfur is used. However, in cross-linking (vulcanizing) EPDM rubber, the EPDM rubber does not have a double bond in its main chain. The double bond is present only in tertiary components such as DCPD (dicyclopentadiene), 1,4-HD (1,4-hexadiene), and ENB (ethylidene norbornene) which are contained in the EPDM rubber as a diene component. Further, the technique of polymerizing the tertiary component polymer has a limitation. Thus, even though the EPDM rubber having the greatest iodine number (iodine number: 35) is vulcanized with sulfur, the vulcanizing speed thereof is lower than that of a diene polymer such as NR (natural rubber) or BR (butadiene rubber) and the mechanical strength of the rubber cannot be improved sufficiently. In order to increase the vulcanizing speed of the EPDM rubber, a vulcanizing accelerator has been hitherto used in addition to the sulfur by selecting an appropriate kind of the vulcanizing accelerator and an optimum addition amount thereof.

However, because the vulcanizing accelerator has a high degree of polarity, it is difficult for the vulcanizing accelerator to be present in the EPDM rubber having a low degree of polarity. Therefore, the vulcanizing accelerator is not dispersed uniformly in the EPDM rubber which has not been vulcanized (cross-linked). Consequently, in a vulcanized rubber composition, the vulcanizing accelerator and reaction products thereof give rise to blooming. When the rubber composition is molded to obtain rubber products (including paper-feeding roller) having desired shapes, the blooming of the vulcanized rubber composition prevents the rubber products from having demanded characteristics. For example, the paper-feeding roller has a low friction coefficient for paper.

A method to suppress the blooming is adding a filler such as silica having a preferable adsorbing property to rubber containing the EPDM rubber as its main component. Although the method is capable of suppressing the blooming of the vulcanizing accelerator and the reaction products thereof, it causes the hardness of the rubber composition to be increasingly high as the addition amount of the filler increases. Thus, the flexibility of the rubber composition may

deteriorate.

There are proposed in each of Japanese Laid-Open Patent Publication Nos. 57-73035 and 57-180647 a method of suppressing the blooming of the vulcanizing accelerator by adding a small amount of polyalkylene glycol or polyoxyethylene alkylene ether to the EPDM rubber. However, these methods are incapable of providing satisfactory blooming-suppressing effect and in addition, cause the polyalkylene glycol or polyoxyethylene alkylene ether to be separated out from the vulcanized rubber composition. Thus, a problem arises.

## SUMMARY OF THE INVENTION

The present invention has been made in view of the above-described situation. Thus, it is an object of the present invention to provide a cross-linked rubber composition superior in ozone resistance and having an appropriate degree of flexibility and a high degree of mechanical strength, with a.mixing ingredient not giving rise to blooming.

In many cases, rubber products (including paper-feeding roller) are used in contact with metal component parts. It is preferable that the rubber products do not cause metal to be corroded. Accordingly, it is another object of the present invention to provide a cross-linked rubber composition which prevents metal from rusting when it contacts metal component parts.

It is still another object of the present invention to manufacture a paper-feeding roller of the cross-linked rubber composition having the above-described characteristics with high productivity.

The present invention which is made for accomplishing above objects is:

A cross-linked rubber composition comprising 100 parts by weight of rubber containing copolymer rubber of ethylene-propylene-diene (EPDM rubber) as a main component thereof; 1 - 20 parts by weight of a resin cross-linking agent; and 0.01 - 10 parts by weight of zinc carbonate.

Further embodiments of the invention are specified in claims 2 to 8.

According to the present invention, the present inventor has found out that it is possible to produce a cross-linked rubber composition which is resistant to ozone, does not give rise to blooming, has an appropriate degree of flexibility and a high degree of mechanical strength with high productivity by mixing a specific amount of a resin cross-linking agent and zinc carbonate with rubber containing EPDM rubber as its main component and by cross-linking a kneaded material consisting thereof.

## BRIEF DESCRIPTION OF THE DRAWINGS

Fig. 1 is a perspective view showing an example of a process of molding a kneaded material of a rubber composition into the shape of a roller and then vulcanizing it.

Fig. 2 shows a state in which a feeding roller formed of the cross-linked rubber composition of the present invention is used as a paper supply roller of an electrostatic copying apparatus.

Fig. 3 shows a state in which a paper-feeding roller formed by molding a cross-linked rubber composition of the present invention is used as a paper supply roller of an electrostatic copying apparatus, supplying sheets of paper to a predetermined portion thereof by separating a sheet of paper from other sheets of paper.

Fig. 4 is a graph for explaining a period of time t10 (minute) required for a torque value to attain T10 = TMax x 0.1 (TMax: maximum torque value) from a point at which a cross-linking starts in a cross-linking curve (torque curve) obtained in a cross-linking reaction of a cross-linked rubber composition.

Fig. 5 shows a method of measuring the friction coefficient of a rubber roller.

## DESCRIPTION OF THE PREFERRED EMBODIMENTS

In the cross-linked rubber composition of the present invention, because the kneaded material is cross-linked by using the resin cross-linking agent compatible with the EPDM rubber, blooming does not occur.

As the resin cross-linking agent, normally, phenol resin and halogenated phenol resin are used. Further, other than the (halogenated) phenol resin, resin of addition condensation type such as triazine formaldehyde resin and hexamethoxymethylmelamine resin can be used. The reason the phenol resin and the halogenated phenol resin are normally used is because they are very compatible with the EPDM rubber; superior in uniformity in their molecular weights, their physical properties, and in their reactions; and can uniformly cross-link rubber containing the EPDM rubber as its main component.

The phenol resin is obtained in a two-stage reaction (addition condensation reaction), namely, an addition

reaction of phenols with aldehydes and a condensation reaction thereof. The halogenated phenol resin has aldehyde units of the phenol resin and at least one halogen atom bonded to each of the aldehyde units. The halogenated phenol resin is indicated by a structural formula (chemical formula 1) shown below:

[Chemical Formula 1]

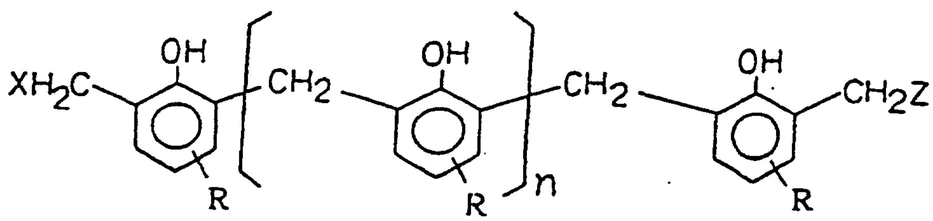

(where X is halogen element, Z is halogen element or -OH group, and R is alkyl group having 1 - 10 of hydrogen atoms or carbon atoms.)

It is possible to use phenol resins synthesized by the reaction (addition and condensation reactions) of phenols such as phenol, alkylphenol, cresol, xylenol and resorcin, and aldehydes such as formaldehyde, acetaldehyde and furfural.

As the phenols, it is favorable to use alkylphenol in which alkyl group is bonded to the ortho- (o-) or the para- (p-) of a benzene ring. This is because the alkylphenol is very compatible with the EPDM rubber. Thus, as the phenol resin, alkylphenol resin using the alkylphenol is preferably used. As the aldehydes, formaldehyde is preferable. This is because the phenol resin using the formaldehyde is reactive and inexpensive, which allows the cost of the rubber composition (rubber product) to be low. Thus, it is more favorable to use phenol resins formed by the addition condensation of the alkylphenol and the formaldehyde. The alkyl group of the alkylphenol has normally 1 - 10 carbon atoms. The alkyl group includes methyl group, ethyl group, propyl group, and butyl group.

The halogenated phenol resin is more reactive than the phenol resin and provides a more favorable result. Thus, in the present invention, it is most favorable to use halogenated phenol resins formed by the addition condensation of the alkylphenol and the formaldehyde. The halogenated phenol resin formed as described below can be used: After the phenol resin is synthesized, the aldehyde unit of the phenol resin and halogenated hydrogen (HX) are allowed to react with each other to replace the hydroxyl group of the aldehyde unit with the halogen atom to form the halogenated phenol resin. The halogenated phenol resin formed as described below can be also used: After the phenol resin not containing halogen atom and a halogen-donating substance such as a metal halide are mixed with a rubber composition, the hydroxyl group of the aldehyde unit of the phenol resin is replaced with the halogen atom during vulcanization. The halogen atom of the halogenated phenol resin may consist of bromide, fluorine; and iodine in addition to chlorine. As the halogen-donating substance, a metal halide such as tin chloride (stannic chloride), iron chloride (ferric chloride), copper chloride (cupric chloride); and halogenated resin such as chlorinated polyethylene can be used.

The degree n of polymerization (number of connections of repeating unit) of the phenol resin and that of the halogenated phenol resin are normally 1 - 10, and preferably 3 - 6. This is because if the degree of polymerization is too low, the reactivity is too high (cross-linking reaction speed is too high), whereas if the degree of polymerization is too high, the reactivity is too low (cross-linking reaction speed is too low). Thus, it is difficult to obtain a favorable result.

As the resin cross-linking agent of the present invention, it is possible to use modified alkylphenol resin formed by addition condensation of sulfated-p-tertiary-butyl phenol and aldehydes and alkylphenol sulfide resin.

According to the present invention, 1 - 20 parts by weight of the resin cross-linking agent is mixed with 100 parts by weight of the rubber (polymer content) containing the EPDM rubber as its main component. It is preferable that 5 - 15 parts by weight of the former is mixed with 100 parts by weight of the latter. This is because if the mixing amount of the resin cross-linking agent exceeds 20 parts by weight, cross-linking proceeds excessively. As a result, a cross-linked rubber composition is too hard. If the mixing amount of the resin cross-linking agent is less than one part by weight, the rubber composition is not cross-linked fully. As a result, it is difficult to impart wear resistance to the cross-linked rubber composition and reduce the permanent compression set thereof.

Zinc carbonate ($ZnCO_3$) is a reaction catalyst of the resin cross-linking agent. The above-described specified amount of the resin cross-linking agent and 0.01 - 10 parts by weight of the zinc carbonate ($ZnCO_3$) are mixed with

100 parts by weight of rubber containing the EPDM rubber as its main component. Consequently, the cross-linking reaction speed is high, and it is possible to obtain a cross-linked rubber composition having a uniform cross-linking structure in a short period of time. Therefore, it is possible to manufacture the cross-linked rubber composition having an improved mechanical strength (improved wear resistance or reduced degree of permanent compression set) with a high productivity. If the mixing amount of the zinc carbonate is less than 0.01 parts by weight, it is impossible to obtain the above-described effect. If the mixing amount of the zinc carbonate is more than 10 parts by weight, the cross-linking reaction speed is too high. Consequently, for example, in molding a kneaded rubber composition in a heated mold by injection molding or press molding and cross-linking it to obtain a cross-linked rubber composition, there is a possibility that a cross-linking reaction proceeds before the rubber composition is filled in the mold without forming a gap between the mold the rubber composition. In this case, the rubber composition is defectively molded. There is another possibility that when the halogenated phenol resin is used as the resin cross-linking agent, metal in contact with the cross-linked rubber composition (molded product thereof) is corroded by halogen remaining in the cross-linked rubber composition. The use of the zinc carbonate at 0.01 - 10 parts by weight thereof prevents these disadvantages from occurring. Accordingly, it is favorable to mix 0.1 - 8 parts by weight of the zinc carbonate and more favorable to mix 1 - 5 parts by weight thereof with 100 parts by weight of the rubber (polymer content) containing the EPDM rubber as its main component

When EPDM rubber is oil-extended, the above-described mixing amount of each of the resin cross-linking agent and the zinc carbonate is the mixing amount for 100 parts by weight of a polymer content of the entire rubber calculated by subtracting an oil content from the oil-extended rubber.

It is favorable that the rubber containing the EPDM rubber (polymer content) as its main component contains 50 wt% or more thereof, more favorable that it contains 80 wt% or more thereof, and most favorable that it contains 95 wt% or more thereof. When the rubber contains 50 wt% or more of the EPDM rubber (polymer content), it is possible to impart a preferable ozone resistance to the cross-linked rubber composition. The diene component of the EPDM rubber is not limited to a specific one, but ethylidene norbornene (ENB) and dicyclopentadiene (DCPD) can be used.

Other than the EPDM rubber, the following rubbers can be used to form the cross-linked rubber composition: butyl rubber, butadiene rubber (BR) , isoprene rubber, styrene-butadiene rubber (SBR), chloroprene rubber (CR), natural rubber (NR), chlorosulfonated polyethylene rubber (CSM), copolymer rubber of epichlorohydrin and ethylene oxide ( CIIC) , homopolymer rubber of epichlorohydrin (CHR), hydrogenated nitrile rubber (NBR), chlorinated polyethylene, urethane rubber, mixture of silicone rubber and ethylene propylene rubber, 1,2-polybutadiene, acrylonitrile-butadiene rubber, ethylene-propylene rubber (EPM), acrylic rubber, and chlorosulfonated polyethylene rubber. These rubbers are used singly or in combination.

In order to reduce the hardness of the cross-linked rubber composition, the cross-linked rubber composition may contain softener such as oil and plasticizer. As the oil, it is possible to use mineral oil (such as paraffinic oil, naphthenic oil, aromatic oil), synthetic oil consisting of hydrocarbon oligomer, or process oil. As the synthetic oil, oligomer of $\alpha$-olefin, oligomer of butene, or oligomer of ethylene and $\alpha$-olefin, can be used. Amorphous oligomer of ethylene and $\alpha$-olefin is favorable by preference. As the plasticizer, it is possible to use, e.g. dioctyl phthalate (DOP), dibutyl phthalate (DBP), dioctyl sebacate (DOS), or dioctyl adipate (DOA).

When the cross-linked rubber composition contains oil, 1 - 200 parts by weight thereof is used per 100 parts by weight of rubber. When the cross-linked rubber composition contains the plasticizer, 1 - 20 parts by weight thereof is used per 100. parts by weight of rubber.

When the oil-extended rubber is used as a part or the entirety of the rubber, oil in the oil-extended rubber acts as a softener. Thus, when the oil-extended rubber is used, it is possible to reduce the hardness of the cross-linked rubber composition without using the oil or the plasticizer. Needless to say, the oil or the plasticizer may be added to the rubber in addition to the oil-extended rubber.

In order to improve the mechanical strength of the cross-linked rubber composition, it may contain filler if necessary. As the filler, it is possible to use powder such as silica, carbon black, clay, talc, calcium carbonate, dibasic phosphite (DLP), basic magnesium carbonate, and alumina. It is preferable that the rubber composition contains less than 10 wt% of the filler per the entire rubber composition. This is because the mixing of the filler with the rubber composition is effective for improving the tensile and tear strengths of rubber but the use of a very large amount thereof reduces the flexibility thereof greatly.

In addition to the above-described mixing ingredients, the cross-linked rubber composition may contain an antioxidant, and wax, as necessary. As the antioxidant, it is possible to use the following substances: imidazoles such as 2-mercaptobenzoimidazole; amines such as phenyl- $\alpha$ -naphthylamine, N,N' -di- $\beta$ -naphthyl-p-phenylenediamine, and N-phenyl-N'-isopropyl-p-phenylenediamine; and phenols such as di-tert-butyl-p-cresol, styrenated phenol.

The cross-linked rubber composition of the present invention is produced by kneading rubber containing EPDM rubber as its main component, a resin cross-linking agent, zinc carbonate, and mixing ingredients which are used if necessary and by cross-linking a kneaded material thereof. Kneading is carried out by a known method. For example, it is preferable to knead them at 80 °C - 150°C for 5 - 20 minutes with a known rubber-kneading apparatus such as an

open roll or a Banbury mixer. The cross-linked rubber composition is used by molding the kneaded material into a shape suitable for a desired product before a cross-linking stage or when the kneaded material is cross-linked. For example, the kneaded material is molded into the shape of a roller, a sheet, a hose or a ring by extrusion molding, injection molding or press molding. The kneaded material may be cross-linked before or after it is molded or when it is molded to reduce an operating time. Although the cross-liking temperature and the period of time are varied according to the kind of the resin cross-linking agent to be used, normally, the kneaded material is cross-linked at 150°C - 180 °C and for 5 - 40 minutes.

For example, in producing a paper-feeding rubber roller of an image-forming apparatus by a method of cross-linking the kneaded material after molding it, as shown in Fig. 1, a shaft S is inserted into a hollow roller-shaped product R formed by molding the kneaded material. Then, the shaft S is rotatably supported by a supporting member C. While the roller-shaped product R is being rotated at a predetermined speed on the shaft S, it is irradiated with electron rays having a predetermined absorbed doze emitted by an electron ray irradiation device E to pre-vulcanize the surface of the roller-shaped product R. Thereafter, the roller-shaped product R is put into a vulcanizing can to vulcanize the entire molded roller-shaped product R.

In producing the paper-feeding rubber roller of the image-forming apparatus by a method of molding and cross-linking the kneaded material at the same time, a mold having a desired shape of a roll is heated; a pre-molded product of the kneaded material is filled into the heated mold; and the pre-molded product is compression-molded (press molding). In this case, the cross-linking of the kneaded material starts simultaneously with the filling of the pre-molded product into the heated mold and terminates before the completion of the molding process. Further, the mold having a desired shape of a roll is heated, and the kneaded material is injection-molded in the mold. In this case, the cross-linking of the kneaded material starts at the stage of pre-heating the kneaded material before performing the injection molding of the kneaded material in the mold and terminates before the completion of the molding process.

When the paper-feeding rubber roller of the image-forming apparatus is formed of the cross-linked rubber composition of the present invention, it can be used as a paper supply roller, a paper transport roller, and a paper discharge roller positioned at a rear part of a fixing device. A marked effect can be obtained by the paper-feeding rubber roller when it is used as the paper supply roller which is greatly affected by fluctuation of the friction coefficient thereof in the paper-feeding performance thereof and which is required to keep the paper-feeding performance thereof for a long time.

Fig. 2 shows a state in which a feeding roller formed of the cross-linked rubber composition of the present invention is used as a paper supply roller of an electrostatic copying apparatus. A shaft 2 is inserted into the center of a rubber roller 1 confronting a pad 3. When the shaft 2 is rotated in a direction shown with an arrow, the rubber roller 1 rotates in the direction, thus rolling a sheet of paper 4 positioned near the rubber roller 1 into the gap between it and the pad 3 and thus supplying the paper 4 to the inside of the copying apparatus.

Fig. 3 shows a state in which the paper-feeding roller formed of the cross-linked rubber composition of the present invention is used as a paper supply roller (upper roller and lower roller), of an electrostatic copying apparatus, supplying sheets of paper to the inside thereof by separating a sheet of paper from other sheets of paper. A shaft 2 is inserted into the center of a lower rubber roller 10a. A torque 11 is always applied to the lower rubber roller 10a and the shaft 2 in the direction opposite to a paper-feeding direction. The shaft 2 is inserted into the center of the upper rubber roller 10b. The upper rubber roller 10b is rotated in a direction shown with an arrow A owing to the rotation of the shaft 2. When the upper rubber roller 10b rotates in the direction shown with the arrow A, a sheet of paper 13 positioned uppermost on a sheaf 12 of paper is separated from a sheet of paper adjacent thereto because the torque 11 is applied to the lower rubber roller 10a. Then, the paper 13 passes through the gap between the upper rubber roller 10b and the lower rubber roller 10a and is supplied to the inside of the copying apparatus.

As the shaft 2, a circular rod made of metal or resin is used. The shaft 2 is inserted into a through-hole of the rubber roller 10a (10b). An adhesive layer may be formed between the shaft 2 and the rubber roller 10a (10b). In this case, the thickness of the rubber roller 10a (10b) is preferably 0.5mm - 20mm. This is because if the thickness thereof is less than 0.5mm, it is not sufficiently elastic and thus the paper supply performance thereof deteriorates in a short period of time.

## EXAMPLES

The present invention will be described below with reference to examples and comparison examples.

[First Experiment]

A cross-linked rubber composition of the first through seventh examples and that of first through fifth comparison examples each having a recipe shown in table 1 were prepared. Rubber rollers for use in a paper-passing test and rubber plates for use in a blooming test were formed of the cross-linked rubber compositions. Numerical values

of the substances are parts by weight.

As high-cis-butadiene rubber, BR11 ( commercial name) manufactured by Nippon Gosei Gomu Co., Ltd. was used.

As oil-extended EPDM rubber, KELTAN509 x 100 (trade name) consisting of paraffin oil-extended EPDM rubber manufactured by Idemitsu DSM Co., Ltd. was used.

As halogenated alkylphenol resin, Tacky Roll 25 (formed by addition condensation reactions of halogenated alkylphenol and formaldehyde, number of carbon atoms of alkyl group of alkylphenol: 5, degree of polymerization: 4) manufactured by Taoka Kagaku Co., Ltd. was used.

Zinc carbonate ($ZnCO_3$) manufactured by Sakai Kagaku Co., Ltd. was used.

Sulfur manufactured by Tsurumi Kagaku Co., Ltd. was used.

As vulcanizing accelerators, KnocksellerM (trade name) and KnocksellerTET (trade name) manufactured by Ouchi Shinko Kagaku Co., Ltd. were used. The KnocksellerM consists of mercaptobenzothiazole. KnocksellerTET consists of tetraethylthiuram disulfide.

The oil-extended EPDM rubber (KELTAN509 x 100) contains 100 parts by weight of process oil per 100 parts by weight of an polymer content. Therefore, half of each of the values shown in the item of the oil-extended EPDM rubber is the part by weight of the polymer content

All the materials were kneaded with a mixing machine (55L kneader) at 100 °C for 45 minutes. The obtained kneaded material was press-molded and cross-linked for 30 minutes at 160 °C and at a pressure of 196.1 $N/cm^2$ ($20kgf/cm^2$). As a result, rubber rollers each having an outer diameter of 20mm, an inner diameter of 9mm, and a width of 10mm were prepared.

The kneaded materials were press-molded and cross-linked for 20 minutes at 160°C at a pressure of 980.6 $N/cm^2$ ($100kg/cm^2$). As a result, rubber plates each having a length of 100mm, a width of 100mm, and a thickness of 2mm were prepared.

The following tests were conducted for each of the samples of the examples and the comparison examples.

[Molding Processability]

Using a vibration-type cure-tester( curelastometer,v-type manufactured by Shimazu Seisakusho) , the samples (kneaded materials) were cross-linked in a condition of temperature: 170 °C, shapes of the samples: $\phi$ x 44m thickness of 2mm, amplitude angle: ± 1 ° , cycle: 100cpm (100 reciprocations per minute) to measure a stress (torques) in response to vibrations applied to each sample. As shown in Fig. 4, a torque curve (cross-linking curve) was drawn in a graph in which the abscissa is time and the ordinate is torque value. A maximum torque value measured upon completion of the cross-linking is denoted by $T_{Max}$. A period of time $t_{10}$ (minute) required for the torque value to attain $T_{10} = T_{Max}$ x 0.1 from the point at which the cross-linking started was measured. Based on the period of time $t_{10}$, each sample was evaluated.

The period of time $t_{10}$ indicates the speed of the cross-linking reaction. When the period of time $t_{10}$ is too small, i.e., when the cross-linking reaction is too fast, in molding and cross-linking the kneaded material in the mold, cross-linking proceeds before the kneaded material is filled in the mold. As a result, the kneaded materials are likely to be defectively molded.

When the period of time $t_{10}$ is too long, the cross-linking reaction takes place too slow, i.e., it takes long to cross-link the kneaded material. Hence, the cross-linking reaction is made at a low degree of productivity. When the cross-linking period of time is reduced for a high productivity, the kneaded material is cross-linked insufficiently. As a result, the rubber composition has a low degree of strength, and the wear resistance and other properties thereof deteriorate.

In the first experiment in which the rubber rollers are formed by press molding in the above-described condition, the appropriate range of the period of time $t_{10}$ is 0.3 - 1.0 minute. In this range, cross-linking proceeds in a sufficient degree without defective molding occurring. Consequently, it is, possible to form molded products having a high degree of mechanical strength with high reproducibility.

[Hardness-Measuring Test]

The hardness of each robber roller was measured with an A-type hardness meter of JIS-K-6301.

[Wear Resistance Test]

A paper-passing test was conducted at a temperature of 23 °C and a humidity of 55%, with the rubber roller installed on a copying apparatus commercially available. In the test, 100000 sheets of paper (PPC paper manufactured by Fuji Xerox Office Supply Co., Ltd.) of size A4 were passed through the rubber roller for five hours. The wear amount

(mg) of each rubber roller was calculated by measuring the weight thereof before and after conducting the paper-passing test.

[Test for Measuring Friction Coefficient]

In the paper-passing test, the friction coefficient of each rubber roller was measured by a method shown in Fig. 5. That is, as shown in Fig. 5, a load of 250g (black arrow of Fig. 5) was applied to a rotation shaft 22 of a rubber roller 21 by sandwiching a PPC paper 24 of size A4 connected with a load cell 25 between the rubber roller 21 and a plate 23. The rubber roller 21 was rotated at a speed of 300mm/second in a direction shown with an arrow (a) of a solid line in the condition of 23 °C and humidity of 55%. A force F (g) generated in a direction shown with a white arrow was measured by the load cell 25 before and after a predetermined number of paper was applied to the rubber roller 21. Using an equation shown below, friction coefficient of the rubber roller 21 was determined from the measured value F (g) and the load W (250g) .

[Equation 1]

$$\nu = F(g)/W(g)$$

To examine the change of the friction coefficient with age, a paper-feeding test was not conducted after measuring the initial friction coefficient. The rubber roller was left to be exposed to the atmospheric air at 23°C and a humidity of 55% to measure the friction coefficient thereof after exposing it to the atmospheric air for one month, three months, and six months in the same method as the above-described one.

[Blooming Test]

Each rubber roller was left for six months at 23°C and a humidity of 55% to visually inspect whether a deposit was present on the surface thereof. The mark ○ of table 1 indicates that no deposit was found on the surface of the rubber roller and thus it was excellent; the mark Δ indicates that a small amount of deposit was found thereon but the rubber roller offers no problem; and the mark X indicates that a large amount of deposit was found thereon and thus the rubber roller was bad.

[Ozone Resistance Test]

Each rubber roller was left for four days at 40 °C, a humidity of 10%, and an ozone concentration of 50pphm to visually inspect whether the rubber roller was cracked. The mark 0 of table 1 indicates that the rubber roller was not cracked and thus it was excellent; the mark Δ indicates that the rubber roller was cracked a little but it offers no problem; and the mark X indicates that that the rubber roller was cracked much and thus it was bad.
Table 1 shows the result of each teat.

Table 1

| | comp. 1 | example 1 | example 2 | example 3 | comp. 2 | example 4 | example 5 | comp. 3 | comp. 4 | example 6 | example 7 | comp. 5 |
|---|---|---|---|---|---|---|---|---|---|---|---|---|
| high-cis-BR | — | — | 40 | 60 | — | — | — | — | — | — | — | — |
| oil-extended EPDM | 200 | 200 | 120 | 80 | 200 | 200 | 200 | 200 | 200 | 200 | 200 | 200 |
| halogenated alkylphenol | — | 10 | 10 | 10 | 10 | 10 | 10 | 10 | 0.5 | 3 | 18 | 22 |
| $ZnCO_3$ | 5 | 5 | 5 | 5 | — | 0.1 | 10 | 15 | 5 | 5 | 5 | 5 |
| sulphur | 1.5 | — | — | — | — | — | — | — | — | — | — | — |
| knockseller TET | 1.5 | — | — | — | — | — | — | — | — | — | — | — |
| knockseller M | 0.5 | — | — | — | — | — | — | — | — | — | — | — |
| t10 (min) | 1.8 | 0.5 | 0.5 | 0.5 | 1.5 | 0.8 | 0.3 | 0.1 | 0.8 | 0.5 | 0.3 | 0.1 |
| hardness | 35 | 35 | 35 | 35 | 25 | 35 | 35 | 35 | 20 | 30 | 39 | 45 |
| F.C. (initial) | 2.3 | 2.3 | 2.3 | 2.3 | 2.4 | 2.3 | 2.3 | 2.3 | 2.5 | 2.4 | 2.1 | 1.7 |
| F.C. (paper passage) | 1.8 | 2.0 | 2.0 | 2.0 | 2.1 | 2.0 | 2.0 | 2.0 | 2.2 | 2.1 | 1.8 | 1.3 |
| wear amount (mg) | 15 | 12 | 12 | 12 | 20 | 12 | 12 | 12 | 25 | 15 | 10 | 7 |
| F.C. (after 6 months) | 1.2 | 2.3 | 2.3 | 2.3 | 2.4 | 2.3 | 2.3 | 2.3 | 2.5 | 2.4 | 2.1 | 1.7 |
| blooming | × | ○ | ○ | ○ | ○ | ○ | ○ | ○ | ○ | ○ | ○ | ○ |
| ozone resistance | ○ | ○ | ○ | △ | ○ | ○ | ○ | ○ | ○ | ○ | ○ | ○ |

F.C. : friction coefficient

As table 1 indicates, the cross-linked rubber compositions of all the examples are superior in moldability ($t_{10}$ is in the range of 0.3 - 1.0 minute) and no blooming was recognized in the molded products (rubber plates) thereof. The rubber rollers of the examples had comparatively low hardnesses and superior wear resistances. That is, they kept high friction coefficients for a long time. Thus, they had preferable paper-feeding performances. Further, there were no reduction in the friction coefficients thereof with elapse of time. Regarding the ozone resistances thereof, cracks were recognized on the surface of the rubber roller of the third example containing 40 wt% of the EPDM rubber per the entire rubber component. But the degree of the crack was so low as to be ignored. In the rubber rollers of the other examples containing 50 wt% or more of the EPDM rubber, the rubber rollers had no cracks on the surfaces thereof, thus each having a preferable ozone resistance.

The cross-linked rubber composition of the first comparison example was formed by cross-linking the kneaded material with sulfur and a cross-linking accelerator without using a resin cross-linking agent. The cross-linking period of time ($t_{10}$ = 1.8 minutes) required in the first comparison example was longer than that required in each of the examples. Blooming occurred in a high extent in the molded product of the first comparison example. Further, the friction coefficient of the rubber roller deteriorated greatly after 100000 sheets of paper were passed therethrough and as time elapsed.

The cross-linked rubber composition of the second comparison example was formed in the same recipe as that of the first example except that zinc carbonate was not used in the second comparison example. The cross-linking period of time ($t_{10}$ = 1.5 minutes) required in the second comparison example was longer than that required in each of the examples. The friction coefficient of the rubber roller deteriorated in a comparatively low degree after 100000 sheets of paper were passed therethrough and as time elapsed. After 100000 sheets of paper were passed therethrough, the surface of the rubber roller was worn in a large amount. Thus, it was difficult to use it for more than 100000 sheets of paper.

The cross-linked rubber composition of the third comparison example was formed in the same recipe as that of the first example except that the addition amount of the zinc carbonate was 15 parts by weight. Because the addition amount of the zinc carbonate was so large that the period of time ($t_{10}$ = 0.1 minutes) was too short. Thus, the kneaded material was likely to be defectively molded.

The cross-linked rubber composition of the fourth comparison example was formed in the same recipe as that of the first example except that the addition amount of the halogenated alkylphenol was 0.5 parts by weight. Because the addition amount of the halogenated alkylphenol was so small that the kneaded material was cross-linked insufficiently and the wear resistance of the rubber roller was poor. Thus, the surface of the rubber roller was worn greatly after 100000 sheets of paper were passed therethrough. Thus, it was difficult to use it for more than 100000 sheets of paper.

The cross-linked rubber composition of the fifth comparison example was formed in the same recipe as that of the first example except that the addition amount of the halogenated alkylphenol was 22 parts by weight. Because the addition amount of the halogenated alkylphenol was as large as more than 20 parts by weight, the kneaded material was cross-linked excessively and thus the hardness of the rubber roller was very high. Thus, the initial friction coefficient of the rubber roller was low.

[Second Experiment]

cross-linked rubber composition of the eighth through 17th example and that of sixth through 10th comparison example each having a recipe shown in table 2 were prepared. A slab-shaped rubber parts for use in tests was formed of the cross-linked rubber compositions for each of the examples and the comparison examples. Numerical values of the substances are parts by weight.

As the oil-extended EPDM rubber, Esprene 670F (trade name) consisting of ENB EPDM rubber manufactured by Sumitomo Kagaku Kogyo Co., Ltd. was used.

As oil-unextended EPDM rubber, Esprene 505A (trade name) consisting of ENB oil-unextended EPDM rubber manufactured by Sumitomo Kagaku Kogyo Co., Ltd. was used.

As high-cis-butadiene rubber, BR11 (trade name) manufactured by Nippon Gosei Gomu Co.,Ltd. Was used.

As the halogenated alkylphenol resin, Tacky Roll 250III (formed by addition condensation reactions of halogenated alkylphenol and formaldehyde, number of carbon atoms of alkyl group of alkylphenol: 5, degree of polymerization: 4) manufactured by Taoka Kagaku Co., Ltd. was used.

Zinc carbonate ($ZnCO_3$) manufactured by Sakai Kagaku Co., Ltd. was used.

As magnesium oxide ( MgO) , Kyowamagu ( trade name) manufactured by Kyowa Kagaku Co., Ltd..was used.

Calcium hydroxide manufactured by Inoue Sekkai Co., Ltd. was used.

Carbon black manufactured by Mitsubishi Kagaku Co., Ltd. was used.

Sulfur manufactured by Tsurumi Kagaku Co., Ltd: was used.

As vulcanizing accelerators, KnocksellerM (trade name) and KnocksellerTET (trade name) manufactured by

Ouchi Shinko Kagaku Co., Ltd. were used. The KnocksellerM consists of mercaptobenzothiazole. KnocksellerTET consists of tetraethylthiuram disulfide.

The oil-extended EPDM rubber (Esprene 670F) contains 100 parts by weight of process oil for 100 parts by weight of an polymer content. Therefore, half of each of the values shown in the item of the oil-extended EPDM rubber is the part by weight of the polymer content.

All the materials were kneaded with a mixing machine (55L kneader). Each of the obtained kneaded material was extrusion-molded in the shape of a sheet and press-molded (170 °C x 20 minutes x pressure of 980.6 $N/cm^2$ (100kgf/$cm^2$)) in the shape of slab. In this manner, a slab-shaped rubber component part (20mm x 30mm x 2mm) for use in tests was formed for each of the examples and the comparison examples. In the press molding, each of the kneaded materials was cross-linked.

The following tests were conducted for the slab-shaped rubber component part of each of the examples and the comparison examples.

[Molding Processability]

Similarly to the first experiment, a period of time $t_{10}$ (minute) required for a torque value to attain $T_{10} = T_{Max} \times 0.1$ from the point at which the cross-linking started was measured. Based on the period of time $t_{10}$, each sample was evaluated.

In the second experiment in which the slab-shaped rubber component parts are formed by press molding in the above-described condition, the appropriate range of the period of time $t_{10}$ is 0.3 2.0 minutes. In this range, cross-linking proceeds in a sufficient degree without defective molding occurring. Consequently, it is possible to form molded products having a high degree of mechanical strength with a high reproducibility.

[Hardness-Measuring Test]

The hardness (Hs) of each of the slab-shaped rubber component parts was measured with a spring hardness tester (A-type).

[Test for Measuring Permanent Compression Set]

Each of the slab-shaped rubber component parts was compressed at 25% at 70 °C for 22 hours, a residual set (%) of each thereof was measured.

[Test for Checking Generation of Rust on Metal]

A metal surface which would contact the slab-shaped rubber component part was subjected to shot blasting. Then, the metal surface was brought into contact with the slab-shaped rubber component part and left in a gear oven for heat aging. Thereafter, each slab-shaped rubber component part was taken out from the gear oven, and each sample was left at normal temperature for seven days to visually check whether rust was generated on each metal surface.

[Blooming Test]

Each rubber roller was left for six months at 23 °C and a humidity of 55% to visually inspect whether a deposit was present on the surface thereof.

[Ozone Resistance Test]

The slab-shaped rubber component parts were elongated by 10% and left for 300 hours at 40 °C and an ozone concentration of 50pphm to visually inspect whether the rubber roller was cracked.

Table 2 shows the result of each teat.

Table 2

| | example 8 | example 9 | example 10 | example 11 | comp. 6 | comp. 7 | comp. 8 | example 12 | example 13 | comp. 9 | example 14 | example 15 | comp. 10 | example 16 | example 17 |
|---|---|---|---|---|---|---|---|---|---|---|---|---|---|---|---|
| oil-extended EPDM | 200 | 200 | 200 | 200 | 200 | 200 | 200 | 100 | 160 | 200 | 200 | 200 | 200 | - | 200 |
| oil-unextended EPDM | - | - | - | - | - | - | - | - | - | - | - | - | - | 100 | - |
| BR11 | - | - | - | - | - | - | - | 50 | 20 | - | - | - | - | - | - |
| carbon black | - | - | - | - | - | - | - | - | - | - | - | - | - | - | 70 |
| $ZnCO_3$ | 0.1 | 1 | 10 | 0.01 | 15 | - | - | 3 | 3 | 3 | 3 | 3 | 3 | 1 | 3 |
| MgO | - | - | - | - | - | 5 | - | - | - | - | - | - | - | - | - |
| $Ca(OH)_2$ | - | - | - | - | - | - | 5 | - | - | - | - | - | - | - | - |
| halogenated alkylphenol | 12 | 12 | 12 | 12 | 12 | 12 | 12 | 12 | 12 | 0.5 | 5 | 20 | 25 | 12 | 12 |
| t10 (min) | 1.5 | 0.5 | 0.4 | 2.0 | 0.2 | 2.0 | 1.6 | 0.8 | 0.6 | 1.2 | 0.5 | 0.3 | 0.1 | 0.5 | 0.3 |
| hardness | 30 | 31 | 30 | 28 | 32 | 32 | 30 | 34 | 32 | 29 | 31 | 30 | 35 | 51 | 45 |
| permanent compres. set | 2.6 | 2.8 | 3.5 | 25.0 | 7.1 | 35.0 | 43.0 | 15.0 | 10.0 | 27.0 | 7.0 | 7.0 | 12.0 | 8.5 | 12.0 |
| generation of rust | non | non | non | × | non | non | non | non | non | non | non | non | non | non | non |
| blooming | non | non | non | non | non | non | non | non | non | non | non | non | non | non | non |
| generation of crack | non | non | non | non | non | non | non | non | non | non | non | non | non | non | non |

As table 2 indicates, the cross-linked rubber compositions of the eighth through 10th examples and 12th through 17th examples are superior in moldability ($t_{10}$ is in the range of 0.3 - 2.0 minutes). Further, no blooming was

recognized in the slab-shaped rubber component parts which are molded products ( rubber plates) of the cross-linked rubber compositions. Moreover, each of the slab-shaped rubber component parts had a low permanent compression set. Furthermore, the metal in contact with each of the slab-shaped rubber component parts did not rust and in addition, the slab-shaped rubber component parts were superior in ozone resistance. The slab-shaped rubber component part of the 11th example was cross-linked in a lower degree and had a greater permanent compression set than those of the other examples because it contained 0.01 parts by weight of zinc carbonate ($ZnCO_3$) which was smaller than those of the slab-shaped rubber component parts of the other examples. But the degree of the cross-linking and that of the permanent compression set offers no problem. The slab-shaped rubber component part of the 11th example was not effective in preventing metal in contact therewith from generating rust.

The cross-linked rubber composition of the sixth comparison example was formed in the same recipe as that of the eighth example except that the mixing amount of the zinc carbonate was 15 parts by weight. Because the mixing amount of the zinc carbonate was so large that the period of time ($t_{10}$ 0.2 minutes) was too short. Thus, the kneaded material was defectively molded.

The cross-linked rubber composition of the seventh and eighth comparison examples were formed in the same recipe as that of the eighth example except that the mixing amount of each of magnesium hydroxide and calcium hydroxide (metallic compounds other than the zinc carbonate) was five parts by weight. The metallic compounds other the zinc carbonate did not allow the cross-linking to proceed. Thus, the permanent compression set of the slab-shaped rubber component part which was the molded product was as great as more than 25%.

The cross-linked rubber composition of the ninth comparison example was formed in the same recipe as that of the 14th example except that the mixing amount of the halogenated alkylphenol was 0.5 parts by weight. Because the mixing amount of the halogenated alkylphenol was so small that the permanent compression set of the slab-shaped rubber component part which was the molded product was as great as more than 25%.

The cross-linked rubber composition of the tenth comparison example was formed in the same recipe as that of the 14th example except that the mixing amount of the halogenated alkylphenol was 25 parts by weight.

Because the mixing amount of the halogenated alkylphenol was so large that the period of time ($t_{10}$ = 0.1 minutes) was too short. Thus, the kneaded material was defectively molded.

As apparent from the above-described construction, according to the present invention, it is possible to obtain a cross-linked rubber composition superior in ozone resistance and having an appropriate degree of flexibility and a high degree of mechanical strength, with no blooming being generated in mixing ingredients contained therein. Further, it is possible to obtain a cross-linked rubber composition which has the above preferable characteristics and has rust-proof property of preventing metal in contact therewith from rusting.

A kneaded material is molded to form a paper-feeding roller for use in an electrostatic copying apparatus. The paper-feeding roller is capable of reliably feeding a large quantity of paper. Further, the paper-feeding performance of the paper-feeding roller does not deteriorate much with age. Furthermore, the kneaded material is molded as rubber products for industrial and daily uses such as electric parts, covers of electric wires, packing, sealing gaskets, waterproof sheets, and hoses. These rubber products are durable and weather-resistant.

Moreover, it is possible to cross-link the kneaded material at a high speed in the cross-linking reaction without an insufficient cross-linking occurring and with the entire rubber composition being uniformly cross-linked. Thus, it is possible to manufacture the cross-linked rubber composition at a low cost.

## Claims

1. A cross-linked rubber composition comprising 100 parts by weight of rubber containing copolymer rubber of ethylene-propylene-diene (EPDM rubber) as a main component thereof: 1-20 parts by weight of a resin cross-linking agent; and 0.01-10 parts by weight of zinc carbonate.

2. The cross-linked rubber composition according to claim 1, wherein the amount of said zinc carbonate is 0.1-8 parts by weight.

3. The cross-linked rubber composition according to claims 1 or 2, wherein the amount of said zinc carbonate is 1-5 parts by weight.

4. The cross-linked rubber composition according to claim 1 or 2, wherein said resin cross-linking agent is phenol resin or halogenated phenol resin.

5. The cross-linked rubber composition according to claim 4, wherein said resin cross-linking agent is alkylphenol resin or halogenated alkylphenol resin.

6. The cross-linked rubber composition according to any one of claims 1 through 5, wherein said rubber contains 50 wt% or more of copolymer rubber of ethylene-propylene-diene (EPDM rubber).

7. A paper-feeding roller formed of a cross-linked rubber composition according to any one of claims 1 through 6.

8. A method of manufacturing a paper-feeding roller, comprising the steps of:

   kneading 100 parts by weight of rubber containing copolymer rubber of ethylene-propylene-diene (EPDM rubber) as a main component thereof, 1-20 parts by weight of a resin cross-linking agent, and 0.01-10 parts by weight of zinc carbonate: and
   filling a kneaded material into a mold to mold said kneaded material into the shape of a roll while said kneaded material is being cross-linked.

**Patentansprüche**

1. Vernetze Kautschukzusammensetzung, umfassend 100 Gewichtsteile Kautschuk, enthaltend Copolymerkautschuk aus Ethylen-Propylen-Dien (EPDM-Kautschuk) als Hauptkomponente davon; 1-20 Gewichtsteile eines Harzvernetzungsmittels; und 0,01-10 Gewichtsteile Zinkcarbonat.

2. Vernetzte Kautschukzusammensetzung nach Anspruch 1, worin die Menge an Zinkcarbonat 0,1-8 Gewichtsteile beträgt.

3. Vernetzte Kautschukzusammensetzung nach Ansprüchen 1 oder 2, worin die Menge an Zinkcarbonat 1-5 Gewichtsteile beträgt.

4. Vernetzte Kautschukzusammensetzung nach Ansprüchen 1 oder 2, worin das Harzvernetzungsmittel Phenolharz oder halogeniertes Phenolharz ist.

5. Vernetzte Kautschukzusammensetzung nach Anspruch 4, worin das Harzvernetzungsmittel Alkylphenolharz oder halogeniertes Alkylphenolharz ist.

6. Vernetzte Kautschukzusammensetzung nach mindestens einem der Ansprüche 1 bis 5, worin der Kautschuk 50 Gew.-% oder mehr Copolymerkautschuk aus Ethylen-Propylen-Dien (EPDM-Kautschuk) enthält.

7. Papierzufuhrwalze, gebildet aus einer vernetzten Kautschukzusammensetzung nach mindestens einem der Ansprüche 1 bis 6.

8. Verfahren zur Herstellung einer Papierzufuhrwalze, umfassend die Schritte:

   Durchkneten von 100 Gewichtsteilen Kautschuk, enthaltend Copolymerkautschuk aus Ethylen-Propylen-Dien (EPDM-Kautschuk) als dessen Hauptkomponente, 1-20 Gewichtsteile eines Harzvernetzungsmittels sowie 0,01-10 Gewichtsteile Zinkcarbonat; und
   Einfüllen des gekneteten Materials in eine Form zum Formen des gekneteten Materials in die Form einer Walze, während das geknetete Material vernetzt wird.

**Revendications**

1. Composition de caoutchouc réticulé comprenant 100 parties en poids de caoutchouc contenant du caoutchouc copolymère d'éthylène-propylène-diène (caoutchouc EPDM) comme composant principal de celui-ci ; 1 à 20 parties en poids d'un agent de réticulation de résine ; et 0,01 à 10 parties en poids de carbonate de zinc.

2. Composition de caoutchouc réticulé selon la revendication 1, dans laquelle la quantité dudit carbonate de zinc est de 0,1 à 8 parties en poids.

3. Composition de caoutchouc réticulé selon la revendication 1 ou 2, dans laquelle la quantité dudit carbonate de zinc est de 1 à 5 parties en poids.

4. Composition de caoutchouc réticulé selon la revendication 1 ou 2, dans laquelle ledit agent de réticulation de résine est une résine phénol ou une résine phénol halogénée.

5. Composition de caoutchouc réticulé selon la revendication 4, dans laquelle ledit agent de réticulation de résine est une résine alkylphénol ou une résine alkylphénol halogénée.

6. Composition de caoutchouc réticulé selon l'une quelconque des revendications 1 à 5, dans laquelle ledit caoutchouc contient 50 % en poids ou plus de caoutchouc copolymère d'éthylène-propylène-diène (caoutchouc EPDM).

7. Rouleau d'entraînement du papier formé d'une composition de caoutchouc réticulé selon l'une quelconque des revendications 1 à 6.

8. Procédé de fabrication d'un rouleau d'entraînement du papier, comprenant les étapes consistant à :

   malaxer 100 parties en poids de caoutchouc contenant du caoutchouc copolymère d'éthylène-propylène-diène (caoutchouc EPDM) comme composant principal de celui-ci, 1 à 20 parties en poids d'un agent de réticulation de résine, et 0,01 à 10 parties en poids de carbonate de zinc ; et
   remplir d'un matériau malaxé un moule pour mouler ledit matériau malaxé sous la forme d'un rouleau tandis que ledit matériau malaxé est en cours de réticulation.

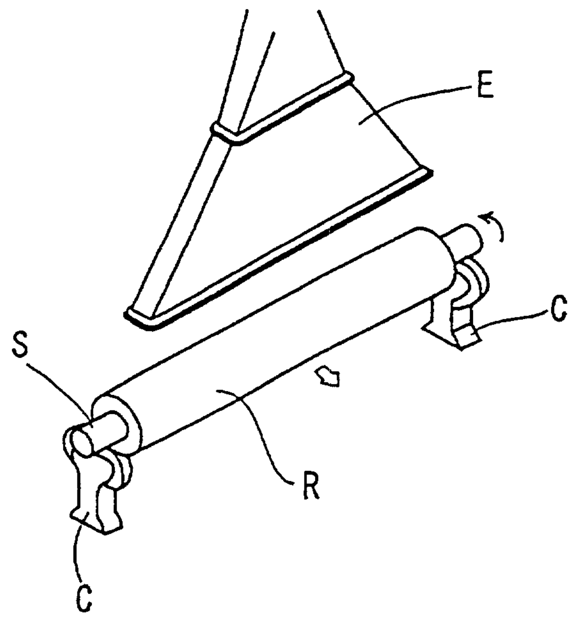


Fig. 1

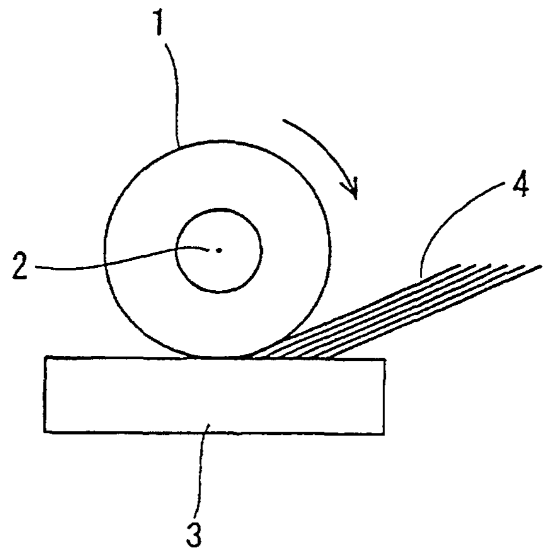


F i g. 2

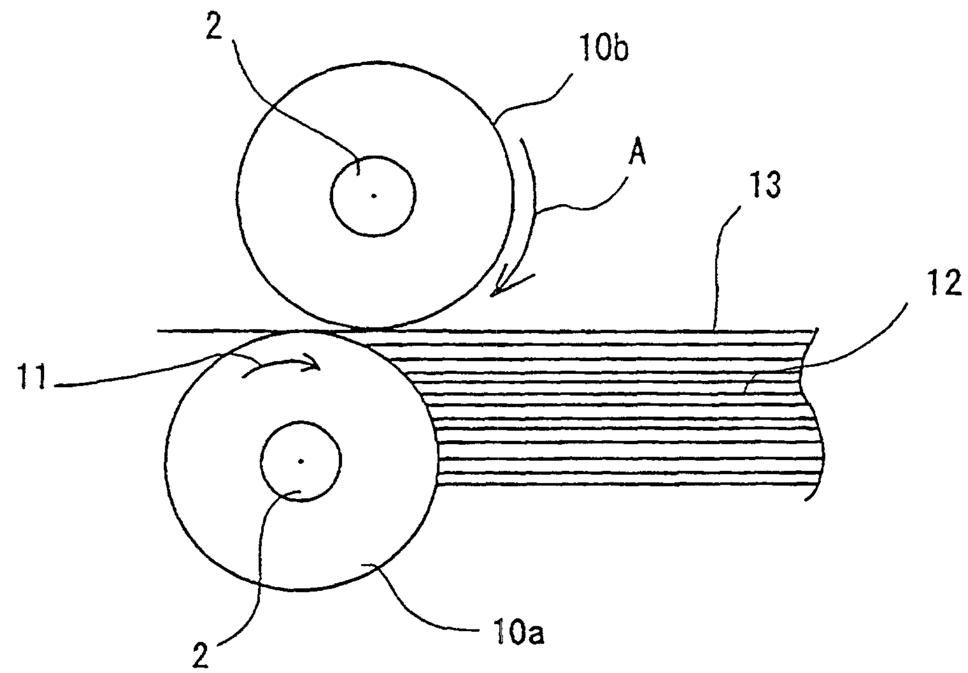


Fig. 3

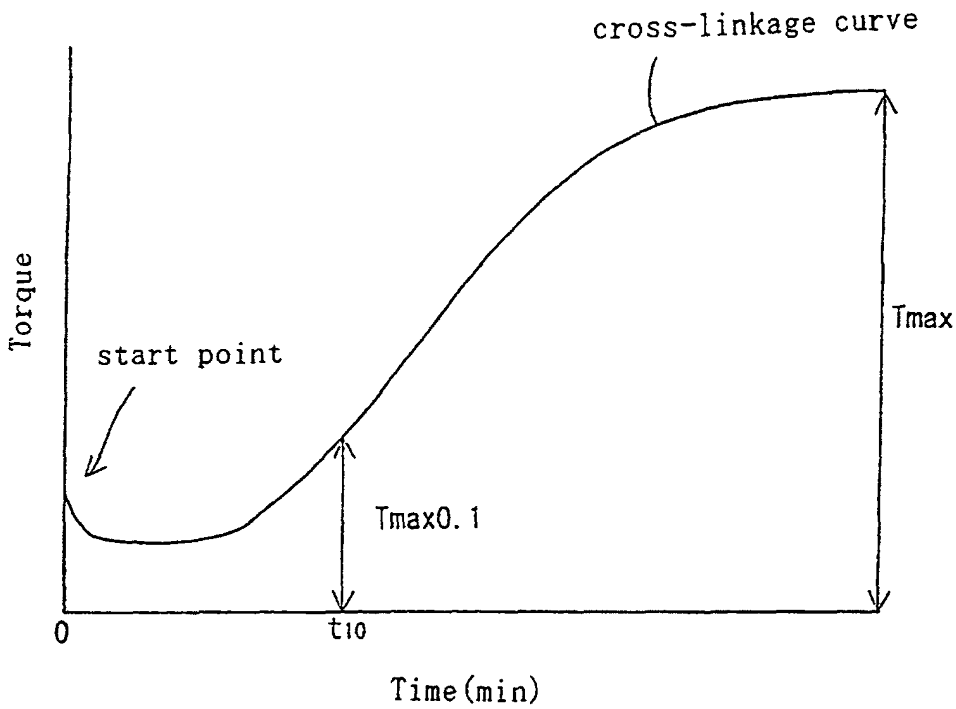
cross-linkage curve
Torque
start point
Tmax
Tmax0.1
0
t10
Time(min)

Fig. 4

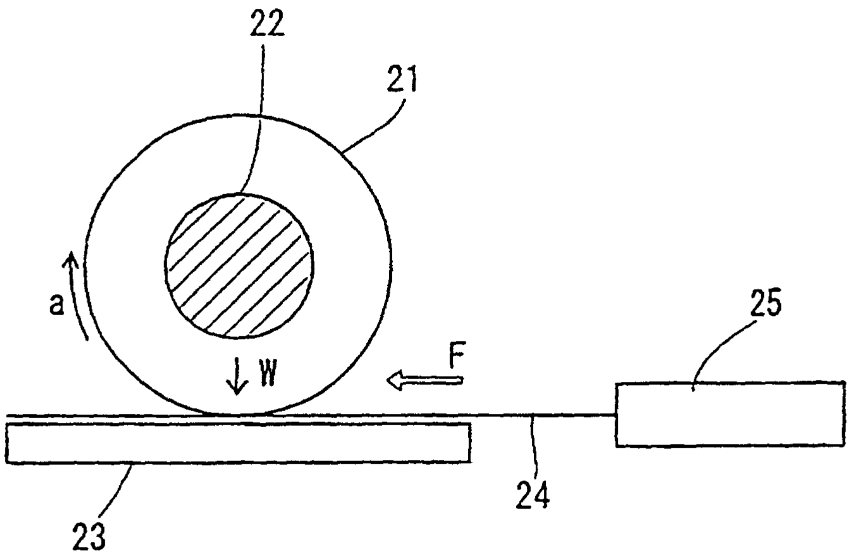


Fig. 5